# FASCICULE DE BREVET EUROPEEN

(11) **EP 2 882 165 B1**
(45) Date de publication et mention de la délivrance du brevet: **22.06.2016**
(21) Numéro de dépôt: 14193084.2
(22) Date de dépôt: 13.11.2014
(51) Int. Cl.: H04L 29/08, H04L 29/06, G06F 17/30

(54) **Procédé de traitement de données pour l'établissement d'une communication WebRTC, dispositif et programme d'ordinateur correspondants**
Datenverarbeitungsverfahren für das Aufbauen einer WebRTC-Kommunikation, entsprechende Vorrichtung und Computerprogramm
Data processing method for establishing a WebRTC communication, corresponding device and computer program

(30) Priorité: 05.12.2013 FR 1362202
(43) Date de publication de la demande: 10.06.2015
(73) Titulaire: Apizee, 22300 Lannion (FR)
(72) Inventeur: L'Hostis, Michel, 22310 PLESTIN LES GREVES (FR); Luart, Frédéric, 22700 LOUANNEC (FR)
(74) Mandataire: Vidon Brevets & Stratégie

(56) Documents cités:
- Anonymous: "WebRTC 1.0: Real-time Communication Between Browsers", , 30 août 2013 (2013-08-30), XP055129898, Extrait de l'Internet: URL:http://dev.w3.org/2011/webrtc/editor/a rchives/20130830/webrtc.html [extrait le 2014-07-17]
- ALVESTRAND GOOGLE H: "Overview: Real Time Protocols for Brower-based Applications; draft-ietf-rtcweb-overview-08.txt", OVERVIEW: REAL TIME PROTOCOLS FOR BROWER-BASED APPLICATIONS; DRAFT-IETF-RTCWEB-OVERVIEW-08.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 3 septembre 2013 (2013-09-03), pages 1-20, XP015093345,
- LI LI ET AL: "Mirror Presence", INFORMATION INTEGRATION AND WEB-BASED APPLICATIONS & SERVICES, ACM, 2 PENN PLAZA, SUITE 701 NEW YORK NY 10121-0701 USA, 2 décembre 2013 (2013-12-02), pages 523-531, XP058044371, DOI: 10.1145/2539150.2539165 ISBN: 978-1-4503-2113-6
- JORN FRANKE ET AL: "Real-time privacy-preserving cobrowsing with element masking", 2013 17TH INTERNATIONAL CONFERENCE ON INTELLIGENCE IN NEXT GENERATION NETWORKS (ICIN), 1 octobre 2013 (2013-10-01), pages 86-93, XP055129022, DOI: 10.1109/ICIN.2013.6670898 ISBN: 978-1-47-990980-3

## Description

### 1. Domaine de l'invention

La technique proposée se rapporte à un service de visioconférence sur navigateurs web. Plus particulièrement, la technique proposée se rapporte à la mise en oeuvre de la visioconférence sur navigateur web parallèlement à l'utilisation du navigateur pour d'autres tâches. Le contexte de la technique proposé s'inscrit dans le cadre de la prochaine normalisation du standard WebRTC.

### 2. Art Antérieur

L'objet de WebRTC est de définir des API (de l'anglais « Application Programming Interface » pour « Interface de Programmation d'Applications ») côté client pour permettre une communication en temps réel, point à point, dans les navigateurs Web. Ces interfaces de programmation permettent la création d'applications qui peuvent être exécutées dans un navigateur, ces applications ne nécessitant aucun téléchargement ou plugins supplémentaires. Ces applications permettent une communication entre différentes parties en temps réel, sans avoir à utiliser des serveurs intermédiaires (sauf si nécessaire pour la traversée d'un pare-feu par exemple, ou pour fournir des services intermédiaires). L'objectif étant que ces applications utilisent l'audio et la vidéo pour la communication en utilisant les caractéristiques natives des terminaux (écran, caméra, haut-parleur, microphone).

Les principales normes applicables, « WebRTC 1.0 : Real-time Communication Between Browsers » et « Media Capture and Streams » ont permis de définir un cadre de développement applicatif autorisant la mise en oeuvre de communications de pair-à-pair entre des terminaux directement au sein des navigateurs. Pour que ces applications fonctionnent, il est nécessaire que les navigateurs (ou les dispositifs jouant le rôle de navigateur) implémentent le langage HTML5. En effet, un certain nombre de composants à la base de WebRTC sont définis dans ce langage.

Ainsi, certaines applications existent et permettent de réaliser une communication de pair à pair entre deux terminaux supportant les techniques WebRTC. Ces applications sont implémentées dans une page web en utilisant d'une part une structure HTML (des balises) qui définissent par exemple un emplacement d'affichage de vidéo et des bibliothèques javascript qui permettent de gérer les communications de pair à pair. Accessoirement, la page Web comprend d'autres éléments à afficher (comme c'est généralement le cas de toutes les pages Web).

La technologie WebRTC offre donc l'avantage de permettre une intégration rapide de fonctionnalités de communication audio/vidéo de pair à pair entre des utilisateurs qui sont connectés à une même page web, ce qui est extrêmement pratique.

En revanche, cette technologie pose un problème majeur : lorsque l'utilisateur se connecte à une page qui apporte les fonctionnalités WebRTC, il pénètre en quelque sorte dans une page de « communication ». Cet espace de communication est matérialisé notamment par une fenêtre « audio vidéo » donnant accès aux ressources audio et vidéo du terminal (par exemple l'ordinateur). L'utilisateur peut, à partir de cette fenêtre, sélectionner une personne avec laquelle il souhaite entrer en relation (cette sélection peut par exemple être réalisée en cliquant sur un bouton, une icône ou une image). En revanche, tout changement de page (c'est-à-dire l'utilisation du bouton de retour « arrière » du navigateur ou bien la sélection d'un lien dans la page pour aller vers une autre page) entraine une coupure de la communication WebRTC. En d'autre termes, tant que l'utilisateur souhaite continuer à converser, il n'est pas possible de quitter la page sur laquelle le flux audio/vidéo s'est établi.

Ceci pose problème à deux niveaux : en premier lieu, il est peu pratique que l'utilisateur soit obligé de rester sur une page dédiée à la communication WebRTC sans qu'il puisse réaliser d'autres actions ou tâches. Ceci est particulièrement vrai quand, par exemple, la communication WebRTC a pour objet un dépannage ou un support technique sur une application Web : il faut que l'utilisateur puisse à la fois dialoguer et à la fois réaliser les actions qui lui sont demandées.

En deuxième lieu, cette limitation nuit au déploiement de la technologie WebRTC dans les sites web existants. En effet, parmi les acteurs qui peuvent être intéressés par la mise en oeuvre du WebRTC, les sites marchands sont en première ligne. En effet, de tels sites marchant peuvent avec cette technologie WebRTC bénéficier d'un contact direct avec leurs clients comme s'il s'agissait d'un contact dans une boutique réelle. Or, il est difficilement envisageable de devoir reconstruire l'intégralité d'une plateforme de commerce électronique uniquement pour réaliser une intégration de cette technologie WebRTC. Il n'est pas assuré qu'une telle reconstruction soit économiquement viable au regard de l'apport du Web RTC.

Il existe donc un besoin de fournir une technique d'insertion, dans une application web existante, de la technologie WebRTC, technique d'insertion qui ne nécessite pas ou peu de modification de l'application web pour être opérationnelle. Par la suite, on se réfère aux technologies WebRTC en utilisant le mot protocole WebRTC.

### 3. Résumé de l'invention

L'invention , définie dans les revendications indépendantes 1, 6 et 7, ne présente pas ces inconvénients de l'art antérieur. Plus particulièrement, l'invention se rapporte à procédé de traitement, par un dispositif apte à mettre en oeuvre un affichage de données issues de la transmission, par ce dispositif, d'une requête suivant le protocole HTTP, cette transmission délivrant une réponse HTTP comprenant une structure de données d'affichage représentative d'une page à afficher et comprenant des données à afficher. Selon l'invention, un tel procédé comprend :
- une étape d'obtention, par l'intermédiaire d'un indicateur, d'une information représentative d'une communication à établir selon le protocole WebRTC en utilisant une application de communication ;
- une étape de création d'une structure de données d'encapsulation au sein de la structure de données d'affichage ;
- une étape de déplacement d'au moins une partie des données à afficher par ladite page au sein de ladite structure de données d'encapsulation ;
- une étape d'établissement par ladite application de communication de ladite communication à établir selon le protocole WebRTC.

Selon un mode de réalisation particulier, ledit procédé comprend en outre, préalablement à ladite étape de déplacement :
- une étape de création d'une balise temporaire ;
- une étape d'insertion, dans ladite balise temporaire, des données à afficher ;
- une étape de déplacement, de ladite balise temporaire vers la structure de données d'affichage, d'un élément nécessaire à l'établissement de ladite communication ;
- une étape d'effacement des données préalablement affichées dans ladite balise temporaire ;
- une étape de rechargement, au sein de ladite structure d'encapsulation, des données à afficher.

Selon une caractéristique particulière ladite étape de rechargement comprend une étape d'émission d'une requête HTTP à destination d'un serveur ; et une étape de réception de la réponse HTTP correspondante.

Selon un mode de réalisation particulier, ladite structure d'encapsulation est destinée à être affichée par ledit dispositif et ce que la taille d'affichage de ladite structure d'encapsulation est égale à la taille d'affichage de ladite structure de données d'affichage.

Selon un mode de réalisation particulier, ledit procédé comprend, préalablement à ladite étape d'obtention, une phase d'initialisation comprenant :
- une étape de réception, par ledit dispositif, de ladite structure de données d'affichage représentative de ladite page à afficher et comprenant un lien vers une bibliothèque de communication ;
- une étape de chargement, de la bibliothèque de communication ;
- une étape d'exécution d'au moins une fonction d'initialisation comprise dans la bibliothèque de communication, ladite fonction d'initialisation, créant, au sein de la structure de données d'affichage, ledit élément nécessaire à l'établissement de ladite communication, ledit élément étant destiné à être utilisé par ladite application de communication ;
- une étape de surveillance, d'une activation d'une communication en temps réel à partir de ladite application de communication.

Dans un autre mode de réalisation, l'invention se rapporte également à un dispositif de traitement, apte à mettre en oeuvre un affichage de données issues de la transmission, par ce dispositif, d'une requête suivant le protocole HTTP, cette transmission délivrant une réponse HTTP comprenant une structure de données d'affichage représentative d'une page à afficher et comprenant des données à afficher.

Un tel dispositif comprend :
- des moyens d'obtention, par l'intermédiaire d'un indicateur, d'une information représentative d'une communication à établir selon le protocole WebRTC ;
- des moyens de création d'une structure de données d'encapsulation au sein de la structure de données d'affichage ;
- Des moyens de déplacement d'au moins une partie des données à afficher par ladite page au sein de ladite structure de données d'encapsulation ;
- des moyens d'établissement par une application de communication de ladite communication à établir.

Selon une implémentation préférée, les différentes étapes des procédés selon l'invention sont mises en oeuvre par un ou plusieurs logiciels ou programmes d'ordinateur, comprenant des instructions logicielles destinées à être exécutées par un processeur de données d'un module relais selon l'invention et étant conçu pour commander l'exécution des différentes étapes des procédés.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, l'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en oeuvre ses propres modules logiciels.

Les différents modes de réalisation mentionnés ci-dessus sont combinables entre eux pour la mise en oeuvre de l'invention.

### 4. Liste des figures

D'autres caractéristiques et avantages de la technique décrite apparaîtront plus clairement à la lecture de la description suivante d'un mode de réalisation préférentiel, donné à titre de simple exemple illustratif et non limitatif, et des dessins annexés, parmi lesquels :
- la figure 1 illustre une initialisation d'une page web reçue suite à une requête HTTP ;
- la figure 2 illustre l'encapsulation des données préalable à la mise en communication ;
- la figure 3 illustre les étapes de l'encapsulation ;
- la figure 4 illustre un dispositif de mise en oeuvre de la technique proposée.

### 5. Description d'un mode de réalisation

### 5.1 Rappel du principe de l'invention

Le principe général de l'invention repose sur une modification dynamique de la structure des données interprétées par le navigateur afin de ne pas interrompre une communication engagée.

La technique permettant de mettre en oeuvre ce principe est d'utiliser une bibliothèque particulière qui est chargée par le navigateur lorsqu'il reçoit les données à interpréter de la part du serveur Web, c'est-à-dire postérieurement à la transmission, par le navigateur, d'une requête HTTP (ou HTTPS) par le navigateur au serveur. Cette bibliothèque est appelée bibliothèque de communication. Elle comprend plus particulièrement au moins une fonction de structuration dynamique de contenu. Cette fonction de structuration dynamique est utilisée pour modifier dynamiquement la structure des données à afficher en fonction d'un indicateur d'engagement d'une communication WebRTC. La technique proposée permet d'autoriser la navigation sur un site internet durant un appel audio/vidéo WebRTC, ce qui n'est pas envisageable autrement.

En d'autres termes, pour autoriser le changement de page sur un site durant un appel WebRTC, la technique consiste à autoriser les changements de pages tant qu'aucune communication n'est établie ou en cours d'établissement. La fonction de gestion de communication WebRTC est gérée dans une bibliothèque additionnelle n'impactant pas les caractéristiques et performances du site pour ainsi maintenir le référencement et la validité des liens dans les moteurs de recherche.

Plus particulièrement, la technique consiste à restructurer la page du site chargé afin de pouvoir déplacer le contenu de cette page, par exemple dans une iFrame, dès qu'un appel est en cours d'établissement. De manière simplifiée, le contenu de la page est dynamiquement supprimé et déplacé dans une iFrame. En fin d'appel, cette iFrame est supprimée pour que le site retrouve ses caractéristiques de référencement et d'accessibilité à partir des moteurs de recherche. Ainsi, la technique proposée ne nécessite pas de modifications importantes de la structure du site. Il n'est pas nécessaire de réaliser une refonte applicative pour implémenter cette technique.

La technique décrite présente plusieurs avantages parmi lesquels :
- l'absence de risque de coupure d'appel en cas de changement de page ;
- le site conserve son référencement et l'accès à partir de lien externe ;
- la possibilité donnée au correspondant de transmettre un lien vers une page Web durant la communication ;
- l'absence de modification majeure du site pour supporter les communications WebRTC ni la mise en oeuvre du procédé.

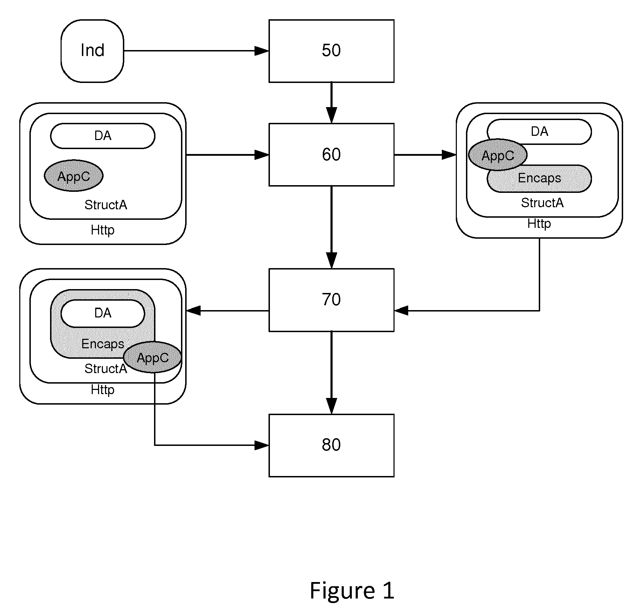

On décrit, en relation avec la figure 1, les différentes étapes de la technique proposée. Préalablement à l'exécution de la méthode proposée, la technique comprend une étape d'insertion, au sein d'un code source de page (tel qu'un code HTML, ou un code d'application WEB générant du code HTML), d'un référencement vers une bibliothèque de communication. Selon un mode de réalisation privilégié cette bibliothèque est une bibliothèque JavaScript. En fonction des modes de réalisation et des langages utilisés, cette bibliothèque peut être écrite dans un autre langage que le langage JavaScript.

Le point de départ est donc une page (statique ou dynamique) comprenant une référence à la bibliothèque de communication. La méthode d'initialisation de la technique proposée est la suivante :
- réception (10), par le navigateur NAV (ou le dispositif mettant en oeuvre le protocole HTTP), d'une structure de données d'affichage (StructA) représentative d'une page (P) à afficher ;
- chargement (20), par ledit navigateur NAV, de la bibliothèque de communication (CLIB) ;
- exécution (30) par ledit navigateur NAV, d'au moins une fonction d'initialisation (F.init) comprise dans la bibliothèque de communication (CLIB), ladite fonction d'initialisation, créant, au sein de la structure de données d'affichage (StructA), une balise, dite balise de communication comprenant, au moins un élément d'interaction avec un utilisateur, ledit élément étant destiné à être utilisé par une application de communication ;
- surveillance (40), par ledit navigateur NAV d'une activation d'une communication en temps réel à partir de ladite application de communication à l'aide d'un indicateur (Ind) qui fournit une information représentative d'une communication à établir.

A ce stade, la page n'a pas été modifiée autrement que par l'insertion de la balise de communication. Cette balise étant insérée par une fonction d'initialisation, la structure de données (typiquement l'arbre DOM HTML) initiale (c'est-à-dire celle qui est utilisée pour le référencement du site par exemple) n'est pas modifiée. Il suffit juste d'insérer une référence à la bibliothèque de communication. Les modifications à apporter sont donc mineures. L'indicateur (Ind) qui fournit une information représentative d'une communication à établir est géré par l'application de communication de la bibliothèque de communication (CLIB).

Passé ce processus d'initialisation, la méthode de gestion de la communication est la suivante :
- obtention (50), par l'intermédiaire de l'indicateur (Ind), d'une information représentative d'une communication à établir ;
- création (60) d'une structure de données d'encapsulation (Encaps) au sein de la structure de données d'affichage (StructA) ;
- déplacement (70) d'au moins une partie des données affichées par ladite page (P) au sein de ladite structure de données d'encapsulation ;
- établissement (80) par une application de communication (AppC) de ladite communication.

Ainsi, dynamiquement, avant que la communication ne soit établie, un déplacement des données de la page qui sont affichées à l'écran est effectué au sein d'une structure d'encapsulation. Une telle structure d'encapsulation est par exemple une « iFrame ». D'autres structures d'encapsulation peuvent être sélectionnées en fonction du langage utilisé. Une autre solution, pour le langage HTML, pourrait être de définir une nouvelle fenêtre de navigateur dans laquelle le contenu de la page serait transféré. Une telle solution serait cependant moins élégante et plus déceptive, d'un point de vue expérience utilisateur.

Cette structure de données d'encapsulation est avantageusement dimensionnée à la taille de la fenêtre, afin que cette modification dynamique ne soit pas perceptible par l'utilisateur. Cette méthode à deux avantages : le premier avantage est qu'il permet en quelque sorte de prioriser le comportement du navigateur : le contenu de la balise de communication n'est pas déplacé lors de l'étape de déplacement. Dès lors, ce contenu reste dans la structure de données d'affichage (StructA). Le deuxième avantage est que le contenu qui est déplacé dans la structure de données d'encapsulation est isolé et est indépendant du contenu de la structure d'affichage (StructA). Il est ainsi possible de naviguer dans cette structure d'encapsulation SANS provoquer de rechargement de la structure de données d'affichage (StructA). Ainsi, la communication n'est pas interrompue.

Lors de la fin de la communication, les étapes inverses sont mise en oeuvre.

La solution proposée permet de maintenir la navigation sur un site durant une communication sans avoir à redévelopper le site pour autoriser le maintien du code de communication actif durant tout l'appel. L'exemple repose sur l'utilisation des API WebRTC pour la mise en oeuvre de la communication. La solution est également applicable pour tout type de solution de communication comme flash ou par applet java. Elle évite ainsi de forcer l'ouverture d'une nouvelle fenêtre dédiée à la communication en parallèle du site (pop-up). Sachant que l'ouverture de fenêtre est de plus en plus bloquée par les navigateurs modernes.

On décrit par la suite un mode de réalisation particulier de la méthode exposée préalablement, dans lequel on réalise plusieurs manipulations dynamiques sur la structure d'affichage de la page Web. Ce mode de réalisation ne constitue pas une limitation de la portée de la technique. Plus particulièrement, bien que cette technique soit décrite dans le cadre d'un navigateur web installé sur une ordinateur personnel, une PDA, une tablette sou un smartphone, la technique peut aussi être mise en oeuvre directement au sein d'une passerelle, d'un émulateur et/ou d'un serveur de gestion de communication. De plus, bien que l'usage évoqué concerne la communication, la technique proposée est également applicable pour tout type de code JavaScript/HTML devant être maintenu actif durant les changements de page d'un site Internet. Compte tenu de la législation restrictive sur les cookies, elle permet également de partager du code et des données côté navigateur entre les pages d'un site sans avoir à utiliser des cookies de navigation. Par ailleurs, durant une conversation chat/audio/vidéo sur un site, il peut être utile de partager une page internet interne ou externe au site. La solution mise en oeuvre permet de partager un lien vers une page et autorise la navigation à partir de ce lien sans risquer d'interrompre l'appel.

### 5.2 Description détaillée

WebRTC est un sous-ensemble d'HTML5 permettant d'effectuer des communications audio et vidéo à partir d'un navigateur internet vers un autre navigateur ou vers un réseau de voix sur IP en passant par une passerelle d'interfonctionnement.

La mise en oeuvre de WebRTC repose sur l'exécution d'un script JavaScript gérant la signalisation d'appel et les actions vers les API GetUserMedia pour l'accès à la caméra et microphone et PeerConnection pour le transfert de flux média vers le terminal distant. Le changement de page sur un site Internet entraine l'arrêt des scripts en cours d'exécution et le remplacement du code HTML et fichiers JavaScript par ceux de la nouvelle page. Tout changement de page durant une communication WebRTC entraine de ce fait l'arrêt de la communication audio/vidéo.

Pour autoriser la navigation sur un site durant un appel WebRTC il est indispensable de repenser l'ensemble du site en remplaçant les changements de page par des liens sur la page chargée pour éviter ce changement de page. Ce changement de mode de conception est très impactant car impose de supprimer tous les formulaires et liens massivement utilisés dans les sites. Ces refontes sont trop lourdes pour pouvoir déployer simplement des modules utilisant la technologie WebRTC sur des sites existants.

Une première solution consisterait à insérer l'ensemble du site dans une iframe dans laquelle la navigation serait autorisée. L'application WebRTC serait dans la page principale dans laquelle se trouve l'iframe. Cette solution impacte fortement le référencement et l'utilisation de lien externe sur le site car le site (vu de l'extérieur) n'est considéré que comme une page unique. Cette solution ne convient donc pas.

Au contraire, une réalisation de la méthode précédente offre une solution à ce problème.

### 5.2.1. Initialisation

L'exemple décrit en annexe A présente une possibilité d'ajout d'une fonction de communication WebRTC dans un site. Dans l'exemple, les fonctionnalités WebRTC sont implémentées dans une librairie JavaScript " libWebRTC.js. La seule modification à apporter au site pour ajouter la fonction de communication est d'ajouter l'appel à la librairie de communication, ce qui est simple et non destructif. En général, pour des raisons d'efficacité, les développeurs utilisent des *framework* de développement Web dans lequel le contenu générique à toutes les pages est décrit dans un fichier *template* (un modèle). Pour généraliser l'usage de la fonctionnalité WebRTC sur toutes les pages sans dupliquer l'appel à la bibliothèque, il n'est donc pas nécessaire de définir l'accès à cette bibliothèque à partir du fichier *template* dans la zone <head></head> ou la partie commune du <body>.

Lorsque la page HTML est appelée à partir du navigateur, elle est chargée dans le navigateur ainsi que la librairie chargée du traitement relatif à la communication WebRTC (libWebRTC.js, voir modification réalisées dans l'exemple, Annexes A et B). Après chargement de la librairie et lors de l'exécution du script, un élément HTML (elWebRTC, défini par une balise Div, dans l'exemple) est ajouté au DOM pour contenir les éléments graphiques à conserver durant les manipulations de la page lors du traitement d'appel (il s'agit par exemple de références à des fichiers d'images, à des tableaux, etc.).

L'initiation a donc modifié automatiquement la structure de données représentative de la page à afficher. Bien entendu, il est également possible, lorsque l'on développe directement une page ou un service Web pour la première fois, d'inclure directement cet élément dans la page. Dès lors, la phase d'initialisation qui est présentée ici n'a d'utilité que lorsque l'on souhaite automatiser la procédure.

### 5.2.1. Traitement de communication

Pour permettre le changement de page durant l'appel, il est nécessaire de maintenir la fonction de communication lors des changements de pages, comme cela a été explicité préalablement. Ce maintien est rendu possible en rechargeant le site sur lequel se déroule la navigation dans une *iFrame* prenant la taille de l'écran (cette « iFrame » joue le rôle de structure de donnée d'encapsulation). Le chargement dans *l'iFrame* est réalisé lorsque l'utilisateur reçoit un appel entrant ou lorsqu'il lance un appel sortant. Le chargement dans *l'iFrame* doit être finalisé avant l'affichage de la vidéo locale ou distante. En fin d'appel, la navigation peut revenir en mode initial par un simple rechargement de la page par exemple.

Pour permettre la navigation à partir d'une *iFrame* n'altérant pas l'appel en cours, il est nécessaire d'effacer le contenu du site chargé dans la page principale et de recharger cette page dans une *iFrame.* Le principe mis en oeuvre consiste à déplacer le contenu de la page dans un élément temporaire, puis de replacer cet élément, et l'élément contenant le fonctionnel de communication (elWebRTC dans l'exemple) dans le corps de page (<body>) afin de le rendre actif. Le contenu de l'élément temporaire (*oldbody* dans l'exemple de l'annexe C) peut ensuite être effacé pour supprimer toute interaction à partir des liens contenus dans la page. Pour redonner le fonctionnel et l'apparence du site, il faut ensuite charger la page dans *l'iFrame.*

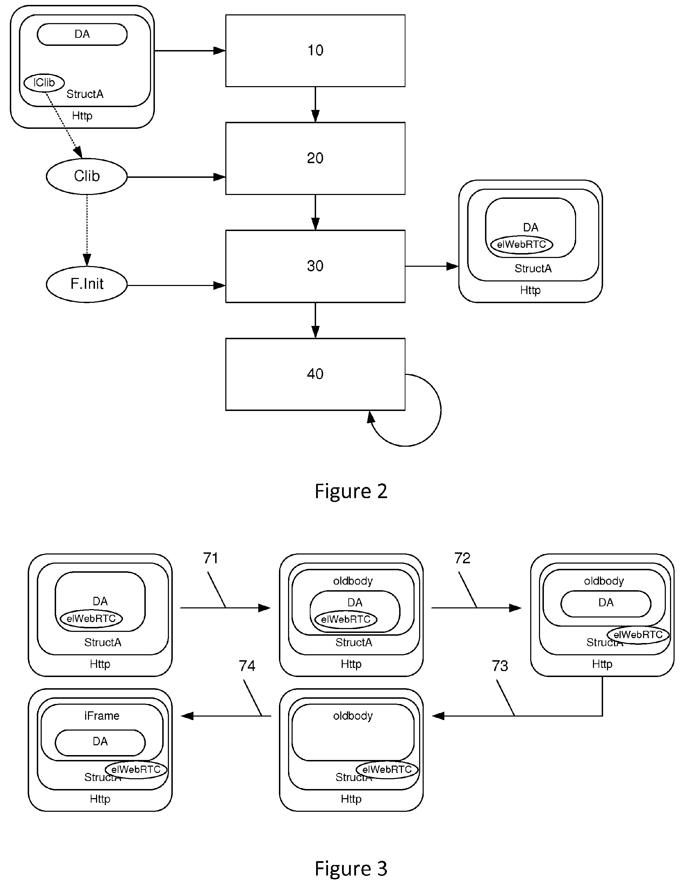

Les différentes étapes de déplacement du contenu de la page sont décrites en relation avec la figure 3 .

Lors de l'initialisation ou par programmation, les fonctions de communication sont insérées dans un élément DIV nommé <elWebRTC> (soit à la génération de la page, soit dynamiquement lors de son interprétation par le navigateur) ; hormis cette insertion, le contenu de la page reste inchangé; le processus de remplacement est le suivant :
Lors de la détection d'une communication, le contenu de la page est transféré (71) au sein d'une balise dynamiquement créée nommé <oldBody>.
Le contenu de l'élément DIV <elWebRTC> est dynamiquement redéplacé (72) dans la balise <body> (c'est-à-dire hiérarchiquement, au niveau supérieur ;
Optionnellement, le contenu initial de la page est effacé (73) puis rechargé (74) dans une iFrame dynamiquement crée.

Alternativement, le contenu <body> est directement inséré dans l'iFrame.

### 5.3 Dispositif de mise en oeuvre

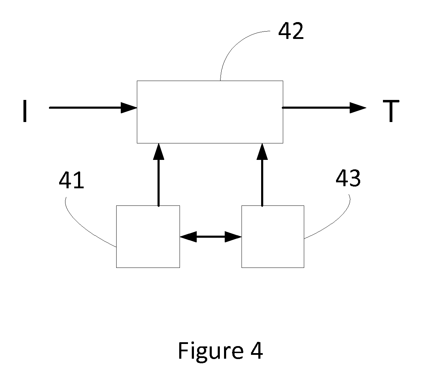

On présente, en relation avec la figure 4, une architecture simplifiée d'un dispositif apte à mettre en oeuvre la technique décrite. Un tel dispositif comprend une mémoire 41, une unité de traitement 42 équipée par exemple d'un microprocesseur, et pilotée par le programme d'ordinateur 43, mettant en oeuvre au moins une partie du procédé tel que décrit. Dans au moins un mode de réalisation, la technique décrite est mise en oeuvre sous la forme d'une application logicielle. Dans un autre mode de réalisation, la technique décrite est mise en oeuvre sous une forme purement matérielle, à l'aide de processeurs et d'interface spécialement créés à cet effet. Un tel dispositif comprend :
- des moyens d'obtention, par l'intermédiaire d'un indicateur (Ind), d'une information représentative d'une communication à établir ;
- des moyens de création d'une structure de données d'encapsulation (Encaps) au sein de la structure de données d'affichage (StructA) ;
- des moyens de déplacement d'au moins une partie des données affichées par ladite page (P) au sein de ladite structure de données d'encapsulation ;
- des moyens d'établissement par une application de communication (AppC) de ladite communication.

Ces moyens sont pilotés par le microprocesseur, à l'aide du programme chargé dans la mémoire du dispositif. En fonction des modes de réalisation, le dispositif comprend également d'autres moyens permettant de réaliser des échanges avec un d'autres dispositifs intégrant des modules de réception et de transmission de données à l'aide du protocole HTTP. Dans un mode de réalisation spécifique de l'invention, un tel dispositif se présente sous la forme d'un nouveau type de terminal de communication, par exemple un smartphone, dans lequel les communications ne sont passées que par l'intermédiaire du protocole http et de la technologie WebRTC. Dans un tel cas, un tel terminal utilise un service Web comprenant des pages générées dynamiquement pour sélectionner des correspondants à appeler et/ou visualiser de l'information tout en conversant avec un autre utilisateur.

### ANNEXE A

```
<html>
 <head>
 </head>
 <body>
 <!-- début du contenu du site dans lequel la fonction WebRTC doit être ajoutée -->
 Hello World !
 <!-- fin du contenu du site dans lequel la fonction WebRTC doit être ajoutée -->
 <!-- chargement fonction de communication -->
 <script type--"text/javascript" src="libWebRTC.js"></script>
 </body>
```

*Annexe A : Exemple de page html dans lequel la communication WebRTC doit être ajoutée*

### ANNEXE B

```
<html>
 <head>
 </head>
 <body>
 <!-- début du contenu du site dans lequel la fonction WebRTC doit être ajoutée -->
 Hello World !
 <!-- fin du contenu du site dans lequel la fonction WebRTC doit être ajoutée -->
 <!-- chargement fonction de communication -->
 <script type--"text/javascript" src="libWebRTC.js"></script>
 <div id="elWebRTC">
      //éléments graphiques nécessaires à la communication temps réel dans la page qui
      seront placés par l'application de communication temps-réels
 </div>
 </body>
```

*Annexe B : Représentation du DOM après exécution de la librairie libWebRTC*.*js*

### ANNEXE C

```
<html>
 <head>
 </head>
 <body>
 <script type"text/javascript" src--"libWebRTC.js"></script>
 <div id="elWebRTC">
      //éléments graphiques nécessaires à la communication temps réel dans la page qui
      seront placés par l'application de communication temps-réels
      <iframe>
           <html>
           <head>
           </head>
           <body>
                <!-- début du contenu du site dans lequel la fonction WebRTC doit
                être ajoutée -->
                Hello World !
                <!-- fin du contenu du site dans lequel la fonction WebRTC doit être
                ajoutée --> </body>
           </html>
      </iframe>
 </div>
 </body>
```

## Revendications

1. Procédé de traitement, par un dispositif apte à mettre en oeuvre un affichage de données issues de la transmission, par ce dispositif, d'une requête suivant le protocole HTTP, ce dispositif recevant une réponse HTTP comprenant une structure de données d'affichage (StructA) représentative d'une page (P) à afficher et comprenant des données à afficher (DA), procédé tel qu'il comprend :
- une étape d'obtention (50), par l'intermédiaire d'un indicateur (Ind), d'une information représentative d'une communication à établir selon le protocole WebRTC en utilisant une application de communication (AppC) ;
- une étape de création (60) d'une structure de données d'encapsulation (Encaps) au sein de la structure de données d'affichage (StructA) ;
- une étape de déplacement (70) d'au moins une partie des données à afficher (DA) par ladite page (P) au sein de ladite structure de données d'encapsulation (Encaps) ;
- une étape d'établissement (80) par ladite application de communication (AppC) de ladite communication à établir selon le protocole WebRTC.

2. Procédé selon la revendication 1, **caractérisé en ce qu'**il comprend en outre, préalablement à ladite étape de déplacement (70) :
- une étape de création d'une balise temporaire (OldBody);
- une étape d'insertion, dans ladite balise temporaire, des données à afficher (DA) ;
- une étape de déplacement, de ladite balise temporaire (OldBody) vers la structure de données d'affichage (StructA), d'un élément nécessaire à l'établissement de ladite communication (eIWebRTC) ;
- une étape d'effacement des données (DA) préalablement affichées dans ladite balise temporaire (OldBody) ;
- une étape de rechargement, au sein de ladite structure d'encapsulation (Encaps), des données à afficher (DA).

3. Procédé selon la revendication 2, **caractérisé en ce que** ladite étape de rechargement comprend une étape d'émission d'une requête HTTP à destination d'un serveur; et une étape de réception de la réponse HTTP correspondante.

4. Procédé selon la revendication 1, **caractérisé en ce que** ladite structure d'encapsulation (Encaps) est destinée à être affichée par ledit dispositif et ce que la taille d'affichage de ladite structure d'encapsulation est égale à la taille d'affichage de ladite structure de données d'affichage.

5. Procédé selon la revendication 1, **caractérisé en ce qu'**il comprend, préalablement à ladite étape d'obtention (50), une phase d'initialisation comprenant :
- une étape de réception (10), par ledit dispositif, de ladite structure de données d'affichage (StructA) représentative de ladite page (P) à afficher et comprenant un lien (IClib) vers une bibliothèque de communication (CLIB) ;
- une étape de chargement (20), de la bibliothèque de communication (CLIB) ;
- une étape d'exécution (30) d'au moins une fonction d'initialisation (F.init) comprise dans la bibliothèque de communication (CLIB), ladite fonction d'initialisation, créant, au sein de la structure de données d'affichage (StructA), ledit élément nécessaire à l'établissement de ladite communication (elWebRTC), ledit élément étant destiné à être utilisé par ladite application de communication (AppC) ;
- une étape de surveillance (40), d'une activation d'une communication en temps réel à partir de ladite application de communication.

6. **Dispositif** de traitement, apte à mettre en oeuvre un affichage de données issues de la transmission, par ce dispositif, d'une requête suivant le protocole HTTP, ce dispositif étant apte à recevoir une réponse HTTP comprenant une structure de données d'affichage (StructA) représentative d'une page (P) à afficher et comprenant des données à afficher, dispositif étant tel qu'il comprend :
- des moyens d'obtention (50), par l'intermédiaire d'un indicateur (Ind), d'une information représentative d'une communication à établir selon le protocole WebRTC ;
- des moyens de création (60) d'une structure de données d'encapsulation (Encaps) au sein de la structure de données d'affichage (StructA) ;
- des moyens de déplacement (70) d'au moins une partie des données à afficher par ladite page (P) au sein de ladite structure de données d'encapsulation (Encaps) ;
- des moyens d'établissement (80) par une application de communication (AppC) de ladite communication à établir.

7. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution du procédé selon l'une au moins des revendications 1 à 5, lorsqu'il est exécuté sur un processeur.

## Patentansprüche

1. Verarbeitungsverfahren, durch eine Vorrichtung, die geeignet ist, eine Anzeige von Daten umzusetzen, die aus der Übertragung einer Anfrage nach dem HTTP Protokoll durch die Vorrichtung hervorgehen, wobei die Vorrichtung eine HTTP Antwort empfängt, die eine Anzeigedatenstruktur (StructA) aufweist, die für eine anzuzeigende Seite (P) repräsentativ ist und anzuzeigende Daten (DA) aufweist,
wobei das Verfahren aufweist:
- einen Schritt des Erhaltens (50), über einen Indikator (Ind), einer Information, die für eine nach dem WebRTC Protokoll unter Verwendung einer Kommunikationsanwendung (AppC) herzustellende Kommunikation repräsentativ ist;
- einen Schritt des Erzeugens (60) einer Kapseldatenstruktur (Encaps) innerhalb der Anzeigedatenstruktur (StructA);
- einen Schritt des Verschiebens (70) wenigstens eines Teils der durch die Seite (P) anzuzeigenden Daten (DA) in die Kapseldatenstruktur (Encaps);
- einen Schritt des Herstellens (80) der herzustellenden Kommunikation nach dem WebRTC Protokoll durch die Kommunikationsanwendung (AppC).

2. Verfahren nach Anspruch 1, **dadurch gekennzeichnet, dass** es vor dem Schritt des Verschiebens (70) weiter aufweist:
- einen Schritt des Erzeugens einer temporären Auszeichnung (OldBody);
- einen Schritt des Einfügens der anzuzeigenden Daten (DA) in die temporäre Auszeichnung;
- einen Schritt des Verschiebens eines für die Herstellung der Kommunikation (elWebRTC) notwendigen Elementes von der temporären Auszeichnung (OldBody) zu der Anzeigedatenstruktur (StructA);
- einen Schritt des Löschens der zuvor in der temporären Auszeichnung (OldBody) angezeigten Daten (DA);
- einen Schritt des erneuten Ladens der anzuzeigenden Daten (DA) innerhalb der Kapselstruktur (Encaps).

3. Verfahren nach Anspruch 2, **dadurch gekennzeichnet, dass** der Schritt des erneuten Ladens einen Schritt des Sendens einer HTTP Anfrage an einen Server; und einen Schritt des Empfangs der zugehörigen HTTP Antwort umfasst.

4. Verfahren nach Anspruch 1, **dadurch gekennzeichnet, dass** die Kapselstruktur (Encaps) dafür vorgesehen ist, durch die Vorrichtung angezeigt zu werden, und dadurch, dass die Anzeigegröße der Kapselstruktur gleich der Anzeigegröße der Anzeigedatenstruktur ist.

5. Verfahren nach Anspruch 1, **dadurch gekennzeichnet, dass** es vor dem Schritt des Erhaltens (50) eine Initialisierungsphase aufweist, die aufweist:
- einen Schritt des Empfangs (10), durch die Vorrichtung, der Anzeigedatenstruktur (StructA), die für die anzuzeigende Seite (P) repräsentativ ist und einen Link (IClib) auf eine Kommunikationsbibliothek (CLIB) aufweist;
- einen Schritt des Ladens (20) der Kommunikationsbibliothek (CLIB);
- einen Schritt des Ausführens (30) wenigstens einer in der Kommunikationsbibliothek (CLIB) enthaltenen Initialisierungsfunktion (F.init), wobei die Initialisierungsfunktion innerhalb der Anzeigedatenstruktur (StructA) das für die Herstellung der Kommunikation (elWebRTC) notwendige Element erzeugt, wobei das Element dafür vorgesehen ist, von der Kommunikationsanwendung (AppC) verwendet zu werden,
- einen Schritt der Überwachung (40) einer Aktivierung einer Echtzeitkommunikation aus der Kommunikationsanwendung heraus.

6. Verarbeitungsvorrichtung, geeignet eine Anzeige von aus der Übertragung einer Anfrage nach dem HTTP Protokoll durch die Vorrichtung hervorgehenden Daten umzusetzen, wobei die Vorrichtung geeignet ist, eine HTTP Antwort, die eine Anzeigedatenstruktur (StructA) aufweist, die für eine anzuzeigende Seite (P) repräsentativ ist und anzuzeigende Daten (DA) aufweist, zu empfangen,
wobei die Vorrichtung aufweist:
- Mittel zum Erhalten (50), über einen Indikator (Ind), einer Information, die für eine nach dem WebRTC Protokoll herzustellende Kommunikation repräsentativ ist;
- Mittel zum Erzeugen (60) einer Kapseldatenstruktur (Encaps) innerhalb der Anzeigedatenstruktur (StructA);
- Mittel zum Verschieben (70) wenigstens eines Teils der durch die Seite (P) anzuzeigenden Daten (DA) in die Kapseldatenstruktur (Encaps);
- Mittel zum Herstellen (80) der herzustellenden Kommunikation durch eine Kommunikationsanwendung (AppC).

7. Computerprogrammprodukt, aus einem Kommunikationsnetz herunterladbar und/oder auf einem computerlesbaren Medium gespeichert und/oder durch einen Mikroprozessor ausführbar, **dadurch gekennzeichnet, dass** es Programmcodeanweisungen zum Ausführen des Verfahrens nach wenigstens einem der Ansprüche 1 bis 5 aufweist, wenn es auf einem Prozessor ausgeführt wird.

## Claims

1. Processing method for processing, by a device suitable for implementing a display of data from the transmission, by this device, of a request according to the HTTP protocol, this device receiving a HTTP response comprising a display data structure (StructA) representative of a page (P) to be displayed and comprising data to be displayed (DA),
the method being such that it comprises:
- a step for obtaining (50), via an indicator (Ind), information representative of a communication to be established according to the WebRTC protocol by using a communication application (AppC);
- a step for creating (60) an encapsulation data structure (Encaps) within the display data structure (StructA);
- a step for moving (70) at least part of the data to be displayed (DA) by said page (P) within said encapsulation data structure (Encaps);
- a step for establishing (80) by said communication application (AppC) said communication to be established according to the WebRTC protocol.

2. Method according to Claim 1, **characterised in that** it further comprises, prior to said step for moving (70):
- a step for creating a temporary tag (OldBody);
- a step for inserting, in said temporary tag, data to be displayed (DA);
- a step for moving, from said temporary tag (OldBody) to the display data structure (StructA), an element necessary for establishing said (elWebRTC) communication;
- a step for deleting the data (DA) previously displayed in said temporary tag (OldBody);
- a step for reloading, within said encapsulation structure (Encaps), data to be displayed (DA).

3. Method according to Claim 2, **characterised in that** said step for reloading comprises a step for transmitting a HTTP request to a server; and a step for receiving the corresponding HTTP response.

4. Method according to Claim 1, **characterised in that** said encapsulation structure (Encaps) is intended to be displayed by said device and **in that** the display size of said encapsulation structure is equal to the display size of said display data structure.

5. Method according to Claim 1, **characterised in that** it comprises, prior to said step for obtaining (50), an initialising phase comprising:
- a step for receiving (10), by said device, said display data structure (StructA) representative of said page (P) to be displayed and comprising a link (IClib) to a communication library (CLIB);
- a step for loading (20) of the communication library (CLIB);
- a step for executing (30) at least one initialising function (F.init) included in the communication library (CLIB), said initialising function creating, within the display data structure (StructA), said element necessary for establishing said (elWebRTC) communication, said element being intended to be used by said communication application (AppC);
- a step for monitoring (40) an activation of a communication in real time from said communication application.

6. Processing device, suitable for implementing a display of data from the transmission, by this device, of a request according to the HTTP protocol, this device being suitable for receiving a HTTP response comprising a display data structure (StructA) representative of a page (P) to be displayed and comprising data to be displayed,
the device being such that it comprises:
- means for obtaining (50), via an indicator (Ind), information representative of a communication to be established according to the WebRTC protocol;
- means for creating (60) an encapsulation data structure (Encaps) within the display data structure (StructA);
- means for moving (70) at least part of the data to be displayed by said page (P) within said encapsulation data structure (Encaps);
- means for establishing (80) by a communication application (AppC) said communication to be established.

7. Computer program product downloadable from a communication network and/or stored on a computer-readable medium and/or executable by a microprocessor, **characterised in that** it comprises program code instructions for executing the method according to at least one of Claims 1 to 5, when it is executed on a processor.
